# EUROPÄISCHE PATENTSCHRIFT

(11) **EP 2 449 862 B1**
(45) Veröffentlichungstag und Bekanntmachung des Hinweises auf die Patenterteilung: **02.09.2015**
(21) Anmeldenummer: 10732275.2
(22) Anmeldetag: 31.05.2010
(51) Int. Cl.: H05H 1/28, H05H 1/34

(54) **DÜSE FÜR EINEN FLÜSSIGKEITSGEKÜHLTEN PLASMABRENNER SOWIE PLASMABRENNERKOPF MIT DERSELBEN**
NOZZLE FOR A LIQUID-COOLED PLASMA TORCH AND PLASMA TORCH HEAD HAVING THE SAME
TUYÈRE POUR UNE TORCHE À PLASMA REFROIDIE PAR LIQUIDE AINSI QUE TÊTE DE TORCHE À PLASMA MUNIE DE CELLE-CI

(30) Priorität: 03.07.2009 DE 102009031857; 30.12.2009 DE 102009060849
(43) Veröffentlichungstag der Anmeldung: 09.05.2012
(73) Patentinhaber: Kjellberg Finsterwalde Plasma und Maschinen GmbH, 03238 Finsterwalde (DE)
(72) Erfinder: KRINK, Volker, 03238 Finsterwalde (DE); LAURISCH, Frank, 03238 Finsterwalde (DE); GRUNDKE, Timo, 03238 Finsterwalde (DE)
(74) Vertreter: Manasse, Uwe
(86) Internationale Anmeldenummer: PCT/DE2010/000608
(87) Internationale Veröffentlichungsnummer: WO 2011/000337

(56) Entgegenhaltungen:
- EP-A2- 1 524 887
- WO-A1-2010/040328
- DE-A1-102007 005 316
- US-A1- 2008 210 669

## Beschreibung

Die vorliegende Erfindung betrifft eine Düse für einen flüssigkeitsgekühlten Plasmabrenner sowie einen Plasmabrennerkopf mit derselben.

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, zum Beispiel das einatomige Argon und/oder die zweiatomigen Gase Wasserstoff, Stickstoff, Sauerstoff oder Luft eingesetzt. Diese Gase ionisieren und dissoziieren durch die Energie eines Lichtbogens. Der durch eine Düse eingeschnürte Lichtbogen wird dann als Plasmastrahl bezeichnet.

Der Plasmastrahl kann in seinen Parametern durch die Gestaltung der Düse und Elektrode stark beeinflusst werden. Diese Parameter des Plasmastrahls sind zum Beispiel der Strahldurchmesser, die Temperatur, Energiedichte und die Strömungsgeschwindigkeit des Gases.

Beim Plasmaschneiden beispielsweise wird das Plasma durch eine Düse, die gas- oder wassergekühlt sein kann, eingeschnürt. Dadurch können Energiedichten bis 2x10⁶ W/cm² erreicht werden. Im Plasmastrahl entstehen Temperaturen bis 30.000 °C, die in Verbindung mit der hohen Strömungsgeschwindigkeit des Gases sehr hohe Schneidgeschwindigkeiten an Werkstoffen realisieren.

Plasmabrenner können direkt oder indirekt betrieben werden. Bei der direkten Betriebsweise fließt der Strom von der Stromquelle über die Elektrode des Plasmabrenners, den mittels Lichtbogen erzeugten und durch die Düse eingeschnürten Plasmastrahl direkt über das Werkstück zur Stromquelle zurück. Mit der direkten Betriebsweise können elektrisch leitfähige Materialien geschnitten werden.

Bei der indirekten Betriebsweise fließt der Strom von der Stromquelle über die Elektrode des Plasmabrenners, den mittels Lichtbogen erzeugten und durch die Düse eingeschnürten Plasmastrahl und die Düse zurück zur Stromquelle. Dabei wird die Düse noch stärker belastet als bei direktem Plasmaschneiden, da sie nicht nur den Plasmastrahl einschnürt, sondern auch den Ansatzpunkt des Lichtbogens realisiert. Mit der indirekten Betriebsweise können sowohl elektrisch leitende als auch nicht leitende Materialien geschnitten werden.

Wegen der hohen thermischen Belastung der Düse wird diese in der Regel aus einem metallischen Werkstoff, vorzugsweise wegen seiner hohen elektrischen Leitfähigkeit und Wärmeleitfähigkeit aus Kupfer, hergestellt. Gleiches gilt für den Elektrodenhalter, der aber auch aus Silber hergestellt sein kann. Die Düse wird dann in einem Plasmabrenner, dessen Hauptbestandteile ein Plasmabrennerkopf, eine Düsenkappe, ein Plasmagasführungsteil, eine Düse, eine Düsenhalterung, eine Elektrodenaufnahme, ein Elektrodenhalter mit Elektrodeneinsatz und bei modernen Plasmabrennern eine Düsenschutzkappenhalterung und eine Düsenschutzkappe sind, eingesetzt. Der Elektrodenhalter fixiert einen spitzen Elektrodeneinsatz aus Wolfram, der für den Einsatz nicht oxidierender Gase als Plasmagas, zum Beispiel ein Argon-Wasserstoff-Gemisch geeignet ist. Eine sogenannte Flachelektrode, deren Elektrodeneinsatz beispielsweise aus Hafnium besteht, ist auch für den Einsatz oxidierender Gase als Plasmagas, zum Beispiel Luft oder Sauerstoff, geeignet. Um eine hohe Lebensdauer für die Düse zu erreichen, wird diese hier mit einer Flüssigkeit, zum Beispiel Wasser, gekühlt. Das Kühlmittel wird über einen Wasservorlauf zur Düse hin- und einen Wasserrücklauf von der Düse weggeführt und durchströmt dabei einen Kühlmittelräum, der durch die Düse und die Düsenkappe begrenzt wird.

In DD 36014 B1 ist eine Düse beschrieben. Diese besteht aus einem gut leitenden Werkstoff, zum Beispiel Kupfer, und hat eine dem jeweiligen Plasmabrennertyp zugeordnete geometrische Form, zum Beispiel einen konisch ausgebildeten Entladungsraum mit einem zylindrischen Düsenausgang. Die äußere Form der Düse ist als Konus ausgebildet, wobei eine annähernd gleiche Wanddicke erzielt wird, die so bemessen ist, dass eine gute Stabilität der Düse und eine gute Wärmeleitung zum Kühlmittel gewährleistet ist. Die Düse sitzt in einem Düsenhalter. Der Düsenhalter besteht aus korrosionsfestem Material, zum Beispiel Messing, und hat innen eine Zentrieraufnahme für die Düse sowie eine Nut für einen Dichtungsgummi, der den Entladungsraum gegen das Kühlmittel abdichtet. Weiterhin befinden sich im Düsenhalter um 180° versetzte Bohrungen für den Kühlmittelzu- und -rücklauf. Auf dem äußeren Durchmesser des Düsenhalters befinden sich eine Nut für einen Rundgummi zur Abdichtung des Kühlmittelraums gegenüber der Atmosphäre sowie ein Gewinde und eine Zentrieraufnahme für eine Düsenkappe. Die Düsenkappe, ebenfalls aus korrosionsfestem Material, zum Beispiel Messing, ist spitzwinklig ausgebildet und hat eine zur Ableitung von Strahlungswärme an das Kühlmittel zweckmäßig bemessene Wandstärke. Der kleinste innere Durchmesser ist mit einem Rundring versehen. Als Kühlmittel wird am einfachsten Wasser verwendet. Diese Anordnung soll eine einfache Herstellung der Düsen bei sparsamem Materialeinsatz und ein schnelles Auswechseln dieser sowie durch die spitzwinklige Bauform ein Schwenken des Plasmabrenners gegenüber dem Werkstück und damit Schrägschnitte ermöglichen.

In DE-OS 1 565 638 wird ein Plasmabrenner, vorzugsweise zum Plasmaschmelzschneiden von Werkstoffen und zur Schweißkantenvorbereitung, beschrieben. Die schlanke Form des Brennerkopfes wird durch die Verwendung einer besonders spitzwinkligen Schneiddüse erreicht, deren innerer und äußerer Winkel untereinander gleich und auch gleich dem inneren und äußeren Winkel der Düsenkappe sind. Zwischen der Düsenkappe und der Schneiddüse wird ein Kühlmittelraum gebildet, in dem die Düsenkappe mit einem Bund versehen ist, welcher mit der Schneiddüse metallisch dichtet, so dass dadurch ein gleichmäßiger Ringspalt als Kühlmittelraum entsteht. Die Zu- und Abführung des Kühlmittels, im allgemeinen Wasser, erfolgt durch zwei um 180° gegeneinander versetzt angeordnete Schlitze im Düsenhalter.

In DE 25 25 939 wird ein Plasmalichtbogenbrenner, insbesondere zum Schneiden oder Schweißen, beschrieben, bei dem der Elektrodenhalter und der Düsenkörper eine austauschbare Baueinheit bilden. Die äußere Kühlmittelzuführung wird im wesentlichen durch eine den Düsenkörper umfassende Überwurfkappe gebildet. Das Kühlmittel strömt über Kanäle in einen Ringraum, welcher durch den Düsenkörper und die Überwurfkappe gebildet wird.

DE 692 33 071 T2 betrifft eine Lichtbogen-Plasmaschneidvorrichtung. Es wird darin eine Ausführungsform einer Düse für einen Plasmalichtbogen-Schneidbrenner beschrieben, die aus einem leitenden Material gebildet ist und eine Austrittsöfnung für einen Plasmagasstrahl und einen hohlen Körperabschnitt, der so ausgebildet ist, dass er eine im allgemeinen konische dünnwandige Konfiguration hat, die in Richtung auf die Austrittsöffnung geneigt ist und einen vergrößerten Kopfabschnitt aufweist, der einstückig mit dem Körperabschnitt ausgebildet ist, wobei der Kopfabschnitt massiv mit Ausnahme eines zentralen Kanals ist, der mit der Austrittsöffnung fluchtet und eine im allgemeinen konische Außenfläche aufweist, die auch in Richtung auf die Austrittsöffnung geneigt ist und einen Durchmesser angrenzend an den des benachbarten Körperabschnitts besitzt, der den Durchmesser des Körperabschnitts übersteigt, um eine zurückgeschnittene Aussparung zu bilden. Die Lichtbogen-Plasmaschneidvorrichtung besitzt eine Sekundärgaskappe. Weiterhin ist zwischen der Düse und der Sekundärgaskappe eine wassergekühlte Kappe angeordnet, um eine wassergekühlte Kammer für die äußere Fläche der Düse für ein hochwirksames Kühlen zu bilden. Die Düse ist durch einen großen Kopf, der eine Austrittsöffnung für den Plasmastrahl umgibt, und einen scharfen Hinterschnitt oder eine Aussparung zu einem konischen Körper gekennzeichnet. Diese Düsenkonstruktion begünstigt das Kühlen der Düse.

Bei den vorangehend beschriebenen Plasmabrennern wird das Kühlmittel über einen Wasservorlaufkanal zur Düse hin- und über einen Wasserrücklaufkanal von der Düse weggeführt. Diese Kanäle sind meist um 180° zueinander versetzt und das Kühlmittel soll auf dem Weg vom Vor- zum Rücklauf die Düse möglichst gleichmäßig umspülen. Dennoch werden immer wieder Überhitzungen in der Nähe des Düsenkanals festgestellt.

Eine andere Kühlmittelführung für einen Brenner, vorzugsweise Plasmabrenner, insbesondere für Plasmaschweiß-, Plasmaschneid-, Plasmaschmelz- und Plasmaspritzzwecke, die hohen thermischen Beanspruchungen der Düse und der Katode standhält, ist in DD 83890 B1 beschrieben. Hier ist für die Kühlung der Düse ein in das Düsenhalteteil leicht einsetzbarer und herausnehmbarer Kühlmedienleitring angeordnet, der zur Begrenzung der Kühlmedienführung auf eine dünne Schicht von maximal 3 mm Dicke entlang der äußeren Düsenwand eine umlaufende Formnut aufweist, in die mehr als eine, vorzugsweise zwei bis vier, und sternförmig zu dieser radial und symmetrisch zur Düsenachse und sternförmig zu dieser mit einem Winkel zwischen 0 und 90° angebrachte Kühlleitungen so einmünden, dass sie von je zwei Kühlmedienabflüssen und jeder Kühlmedienabfluss von zwei Kühlmedienzuflüssen benachbart ist.

Diese Anordnung hat wiederum den Nachteil, dass ein höherer Aufwand für die Kühlung durch die Verwendung eines zusätzlichen Bauteils, den Kühlmedienleitring, notwendig ist. Außerdem vergrößert sich dadurch die gesamte Anordnung.

Zur Verbesserung der Wasserkühlung für die Düse sind im DE 10 2007 005 316 A1 ein Wasservorlaufkanal und ein Wasserrücklaufkanal in die Düse eingearbeitet.

Der Erfindung liegt somit die Aufgabe zugrunde, auf einfache Weise eine Überhitzung in der Nähe des Düsenkanals bzw. der Düsenbohrung zu vermeiden.

Erfindungsgemäß wird diese Aufgabe gelöst durch einen Plasmabrennerkopf , umfassend:
- eine Düse nach einem der Ansprüche 1 bis 14,
- eine Düsenhalterung zur Halterung der Düse, und
eine Düsenkappe, wobei die Düsenkappe und die Düse einen Kühlflüssigkeitsraum bilden, der über zwei jeweils um 60° bis 180° versetzte Bohrungen mit einer Kühlflüssigkeitszulaufleitung bzw. Kühlflüssigkeitsrücklaufleitung verbindbar ist, wobei die Düsenhalterung so gestaltet ist, dass die Kühlflüssigkeit nahezu senkrecht zur Längsachse des Plasmabrennerkopfes auf die Düse treffend in den Kühlflüssigkeitsraum und/oder nahezu senkrecht zur Längsachse aus dem Kühlflüssigkeitsraum in die Düsenhalterung gelangt.

Weiterhin liefert die vorliegende Erfindung eine Düse für einen flüssigkeitsgekühlten Plasmabrenner, umfassend eine Düsenbohrung für den Austritt eines Plasmagasstrahls an einer Düsenspitze, einen ersten Abschnitt, dessen Außenfläche im wesentlichen zylindrisch ist, und einen sich daran zur Düsenspitze anschließenden zweiten Abschnitt, dessen Außenfläche sich zur Düsenspitze hin im wesentlichen kegelförmig verjüngt, wobei mindestens eine Flüssigkeitszulaufnut und/oder mindestens eine Flüssigkeitsrücklaufnut vorgesehen ist/sind und sich über den zweiten Abschnitt in der Außenfläche der Düse zur Düsenspitze hin erstrecken und wobei die Flüssigkeitszulaufhut oder mindestens eine der Flüssigkeitszulaufnuten und/oder eine Flüssigkeitsrücklaufnut oder mindestens eine der Flüssigkeitsrücklaufnuten sich auch über einen Teil des ersten Abschnitts erstreckt/erstrecken und sich im ersten Abschnitt mindestens eine Nut, die mit der Flüssigkeitszulaufnut oder mindestens einer der Flüssigkeitszulaufnuten oder mit der Füssigkeitsrücklaufnut oder mindestens einer der Flüssigkeitsrücklaufnuten in Verbindung steht, befindet. Mit im wesentlichen soll zylindrisch gemeint sein, dass die Außenfläche zumindest bei Wegdenken der Nuten, wie Flüssigkeitszulauf- und rücklaufnuten, im Großen und Ganzen zylindrisch ist. In analoger Weise soll "im wesentlichen kegelig verjüngt" bedeuten, dass die Außenfläche zumindest bei Wegdenken der Nuten, wie Flüssigkeitszulauf- und rücklaufnuten, im Großen und Ganzen kegelig verjüngt sind.

Gemäß einer besonderen Ausführungsform des Plasmabrennerkopfes weist die Düse mindestens eine Flüssigkeitszulaufnut und mindestens eine Flüssigkeitsrücklaufnut auf, und weist die Düsenkappe auf ihrer Innenfläche mindestens drei, Ausnehmungen, auf, deren zur Düse gewandten Öffnungen sich jeweils über ein Bogenmaß (b₂) erstrecken, wobei das Bogenmaß (b₄; c₄; d₄; e₄) der in Umfangsrichtung an die Flüssigkeitszulaufnut(en) und/oder Flüssigkeitsrücklaufnut(en) angrenzenden, gegenüber der bzw. den Flüssigkeitszulaufnut(en) und/oder Flüssigkeitsrücklaufnut(en) nach außen hervorstehenden Bereiche der Düse jeweils mindestens genauso groß wie das Bogenmaß (b₂) ist. Auf diese Weise wird ein Nebenschluss von Kühlmittelzulauf zum Kühlmittelrücklauf besonders elegant vermieden.

Weiterhin kann bei dem Plasmabrennerkopf vorgesehen sein, dass sich die beiden Bohrungen jeweils im wesentlichen parallel zur Längsachse des Plasmabrennerkopfes erstrecken. Dadurch wird erreicht, dass Kühlflüssigkeitsleitungen platzsparend an den Plasmabrennerkopf angeschlossen werden können.

Insbesondere können die Bohrungen um 180° versetzt angeordnet sein.

Vorteilhafterweise ist das Bogenmaß des Abschnitts zwischen den Ausnehmungen der Düsenkappe maximal halb so groß wie das minimale Bogenmaß der Flüssigkeitsrücklaufhut(en) und/oder das minimale Bogenmaß der Flüssigkeitszulaufnut(en) der Düse.

In einer besonderen Ausführungsform der Düse sind mindestens zwei Flüssigkeitszulaufnuten und/oder mindestens zwei Flüssigkeitsrücklaufnuten vorgesehen.

Vorteilhafterweise sind der Mittelpunkt der Flüssigkeitszulaufnut oder mindestens einer der Flüssigkeitszulaufnuten und der Mittelpunkt der Flüssigkeitsrücklaufnut oder mindestens einer der Flüssigkeitsrücklaufnuten um 180° versetzt zueinander über den Umfang der Düse angeordnet.

Vorteilhafterweise liegt/liegen die Breite der Flüssigkeitszulaufnut oder mindestens einer der Flüssigkeitszulaufnuten(en) und/oder die Breite der Flüssigkeitsrücklaufnut oder mindestens einer der Flüssigkeitsrücklaufnuten in Umgangsrichtung im Bereich von 10° bis 270° liegt/liegen.

Gemäß einer besonderen Ausführungsform beträgt die Summe der Breiten der Flüssigkeitszulauf- und/oder -rücklaufnuten zwischen 20° und 340°.

Auch kann vorgesehen sein, dass die Summe der Breiten der Flüssigkeitszulauf- und/oder die rücklaufnuten zwischen 60° und 300° beträgt.

Es kann vorgesehen sein, dass sich die Nut oder eine der Nuten in Umfangsrichtung des ersten Abschnitts der Düse über den gesamten Umfang erstreckt.

Insbesondere kann dabei vorgesehen sein, dass sich die die Nut oder mindestens eine der Nuten in Umfangsrichtung des ersten Abschnitts der Düse über einen Winkel ζ1 oder ζ2 im Bereich von 60° bis 300° erstreckt.

Insbesondere kann dabei vorgesehen sein, dass sich die die Nut oder mindestens eine der Nuten in Umfangsrichtung des ersten Abschnitts der Düse über einen Winkel ζ1 oder ζ2 im Bereich von 90° bis 270° erstreckt.

Bei einer weiteren Ausführungsform der Düse sind genau zwei Flüssigkeitszulaufnuten und genau zwei Flüssigkeitsrücklaufnuten vorgesehen.

Insbesondere können die beiden Flüssigkeitszulaufnuten über den Umfang der Düse symmetrisch zu einer Geraden angeordnet sein, die sich vom Mittelpunkt der Flüssigkeitsrücklaufnuten im rechten Winkel durch die Längsachse der Düse erstreckt, und können die beiden Flüssigkeitsrücklaufnuten über den Umfang der Düse symmetrisch zu einer Geraden angeordnet sein, die sich vom Mittelpunkt der Flüssigkeitszulaufnut im rechten Winkel durch die Längsachse der Düse erstreckt.

Vorteilhafterweise sind die Mittelpunkte der beiden Flüssigkeitszulaufnuten und/oder die Mittelpunkte der beiden Flüssigkeitsrücklaufnuten um einen Winkel versetzt zueinander über den Umfang der Düse angeordnet, der im Bereich von 20° bis 180° liegt.

Außerdem kann vorgesehen sein, dass die beiden Flüssigkeitszulaufnuten und/oder die beiden Flüssigkeitsrücklaufnuten im ersten Abschnitt der Düse miteinander in Verbindung stehen.

Zweckmäßigerweise geht mindestens eine der Nuten über die Flüssigkeitszulaufnut oder mindestens eine der Flüssigkeitszulaufnuten oder über die Flüssigkeitsrücklaufnut oder mindestens eine der Flüssigkeitsrücklaufnuten hinaus.

Der Erfindung liegt die überraschende Erkenntnis zugrunde, dass durch Zuführen und/oder Abführen der Kühlflüssigkeit im rechten Winkel zur Längsachse des Plasmabrennerkopfes statt - wie im Stand der Technik - parallel zur Längsachse des Plasmabrennerkopfes, eine bessere Kühlung der Düse durch den deutlich längeren Kontakt der Kühlflüssigkeit mit der Düse und durch das Führen der Kühlflüssigkeit durch Nuten in der Düse im zylindrischen Bereich zum Düsenhalter hin erzielt wird.

Wenn mehr als eine Flüssigkeitszulaufnut vorgesehen sind, so lässt sich damit im Bereich der Düsenspitze eine besonders gute Verwirbelung der Kühlflüssigkeit durch das Aufeinandertreffen der Kühlflüssigkeitsströme erzielen, die üblicherweise auch mit einer besseren Kühlung der Düse einhergeht.

Weitere Merkmale und Vorteile der Erfindung ergeben sich aus den beigefügten Ansprüchen und der nachstehenden Beschreibung, in der mehrere Ausführungsbeispiele anhand der schematischen Zeichnungen im einzelnen erläutert sind. Dabei zeigt:
- Fig. 1: eine Längsschnittansicht durch einen Plasmabrennerkopf mit Plasma- und Sekundärgaszuführung mit einer Düse gemäß einer besonderen Ausführungsform der vorliegenden Erfindung
- Fig. 1a: eine Schnittdarstellung entlang der Linie A-A von Fig. 1;
- Fig. 1b: eine Schnittdarstellung entlang der Linie B-B von Fig. 1;
- Fig. 2: Einzeldarstellungen (links oben: Draufsicht von vorne; rechts oben: Längsschnittansicht; rechts unten: Seitenansicht) der Düse von Fig. 1;
- Fig. 3: Einzeldarstellungen (links oben: Draufsicht von vorne; rechts oben: Längsschnittansicht; rechts unten: Seitenansicht) einer Düse gemäß einer weiteren besonderen Ausführungsform der Erfindung;
- Fig. 4: Einzeldarstellungen (links oben: Draufsicht von vorne; rechts oben: Längsschnittansicht; rechts unten: Seitenansicht) einer Düse gemäß einer weiteren besonderen Ausführungsform der Erfindung;
- Fig. 5: eine Längsschnittansicht durch einen Plasmabrennerkopf mit Plasma- und Sekundärgaszuführung mit einer Düse gemäß einer weiteren besonderen Ausführungsform der vorliegenden Erfindung
- Fig. 5a: eine Schnittdarstellung entlang der Linie A-A von Fig.5;
- Fig. 5b: eine Schnittdarstellung entlang der Linie B-B von Fig. 5;
- Fig. 6: Einzeldarstellungen (links oben: Draufsicht von vorne; rechts oben: Längsschnittansicht; rechts unten: Seitenansicht) einer Düse gemäß einer weiteren besonderen Ausführungsform der Erfindung; und
- Fig. 7: Einzeldarstellungen der in Fig. 1 eingesetzten Düsenkappe 2, links : Längsschnittansicht, rechts: Ansicht von links des Längsschnitts.

Im Vorangehenden und auch im Nachfolgenden soll mit einer Nut z.B. auch eine Abflachung gemeint sein.

In der nachfolgenden Beschreibung werden Ausführungsformen von Düsen beschrieben, die mindestens eine Flüssigkeitszulaufnut, hier als Kühlflüssigkeitszulaufnut bezeichnet, und mindestens eine Flüssigkeitsrücklaufnut, hier als Kühlflüssigkeitsrücklaufnut bezeichnet, insbesondere jeweils genau eine und jeweils genau zwei aufweisen. Die Erfindung ist darauf jedoch nicht beschränkt. Es kann eine größere Anzahl von Flüssigkeitszulauf- und - rücklaufnuten vorhanden sein und/oder die Anzahl von Flüssigkeitszulauf- und - rücklaufnuten kann unterschiedlich sein.

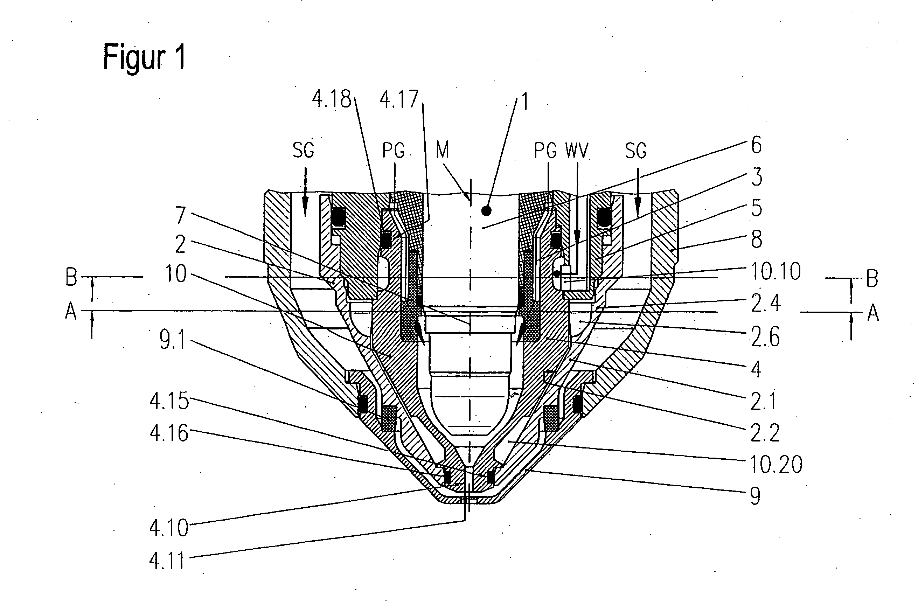

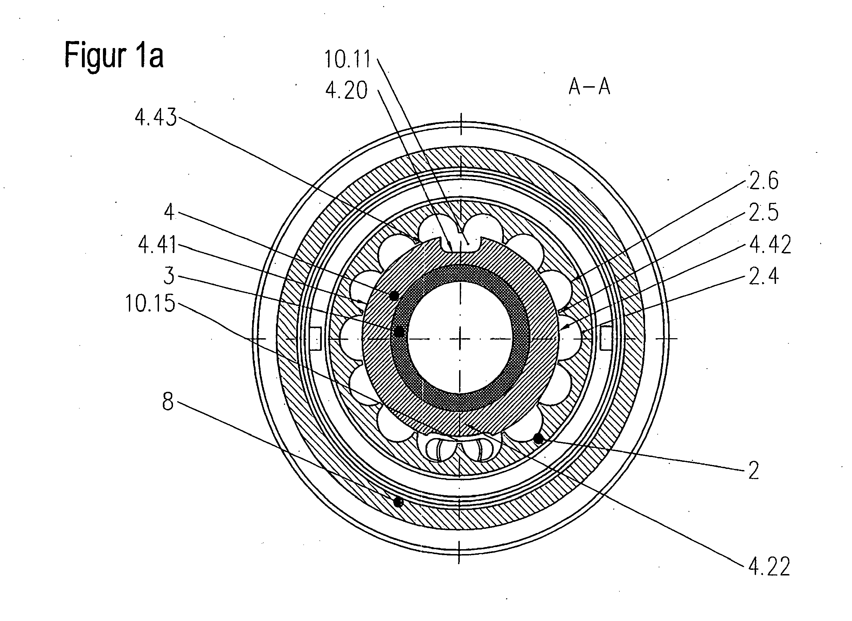

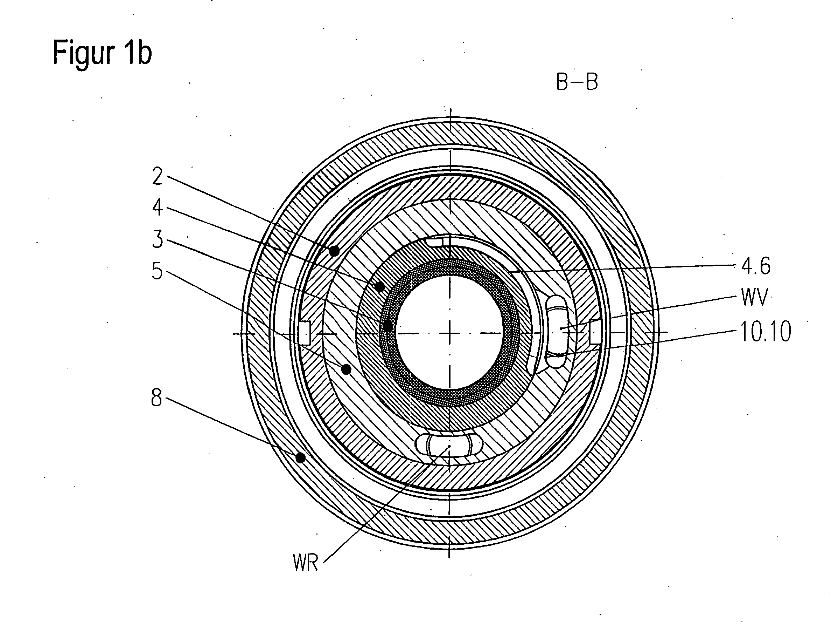

Der in den Figur 1 gezeigte Plasmabrennerkopf 1 nimmt mit einer Elektrodenaufnahme 6 eine Elektrode 7 im vorliegenden Fall über ein Gewinde (nicht dargestellt) auf. Die Elektrode 7 ist als Flachelektrode ausgebildet. Für den Plasmabrenner kann zum Beispiel Luft oder Sauerstoff als Plasmagas (PG) verwendet werden. Eine Düse 4 wird von einer im Wesentlichen zylindrischen Düsenhalterung 5 aufgenommen. Eine Düsenkappe 2, die über ein Gewinde (nicht dargestellt) am Plasmabrennerkopf 1 befestigt ist, fixiert die Düse 4 und bildet mit dieser einen Kühlflüssigkeitsraum. Der Kühlflüssigkeitsraum wird durch eine mit einem Rundring 4.16 realisierte Dichtung, der sich in einer Nut 4.15 der Düse 4 befindet, zwischen der Düse 4 und der Düsenkappe 2 abgedichtet und durch eine mit einem Rundring 4.18 realisierte Dichtung, der sich in einer Nut 4.17 befindet, zwischen der Düse 4 und der Düsenhalterung 5 abgedichtet.

Ein Kühlflüssigkeit, z. B. Wasser oder mit Gefrierschutzmittel versetztes Wasser durchströmt den Kühlflüssigkeitsraum von einer Bohrung des Kühlflüssigkeitsvorlaufs WV zu einer Bohrung des Kühlflüssigkeitsrücklaufs WR, wobei die Bohrungen um 90° zueinander versetzt angeordnet sind (s. Fig. 1b).

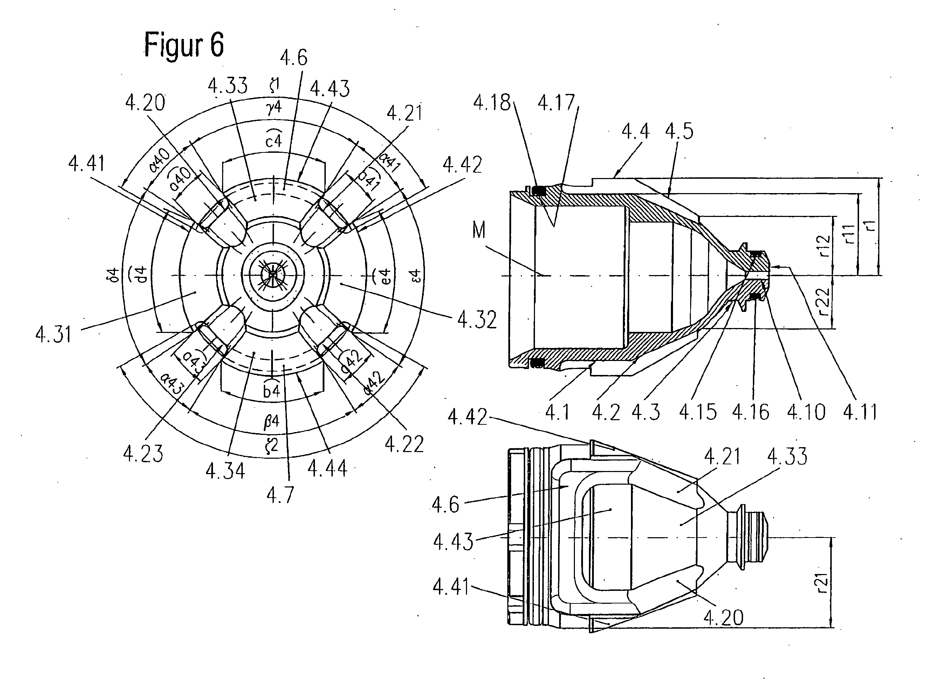

Bei Plasmabrennern im Stand der Technik kommt es immer wieder zur Überhitzung der Düse 4 im Bereich der Düsenbohrung 4.10. Es kann aber auch zu Überhitzungen zwischen einem zylindrischen Abschnitt 4.1 (s. Fig. 6) der Düse 4 und der Düsenhalterung 5 kommen. Dies trifft insbesondere auf Plasmabrenner, die mit hohem Pilotstrom oder indirekt betrieben werden, zu. Dies zeigt sich durch Verfärbung des Kupfers nach kurzer Betriebszeit. Hier treten schon bei Strömen von 40A Verfärbungen nach kurzer Zeit (z.B. 5 Minuten) auf.

Ebenso wird die Dichtstelle zwischen Düse 4 und Düsenkappe 2 überlastet, was zur Beschädigung des Rundrings 4.16 und damit zur Undichtigkeit und Kühlflüssigkeitsaustritt führt. Untersuchungen haben ergeben, dass dieser Effekt besonders auf der dem Kühlflüssigkeitsrücklauf zugewandten Seite der Düse 4 auftritt. Es wird angenommen, das der thermisch am höchsten beanspruchte Bereich, die Düsenbohrung 4.10 der Düse 4 unzureichend gekühlt wird, weil die Kühlflüssigkeit den der Düsenbohrung am nächsten liegenden Teil 10.20 des Kühlflüssigkeitsraumes unzureichend durchströmt und/oder diesen insbesondere auf der dem Kühlflüssigkeitsrücklauf zugewandten Seite gar nicht erreicht.

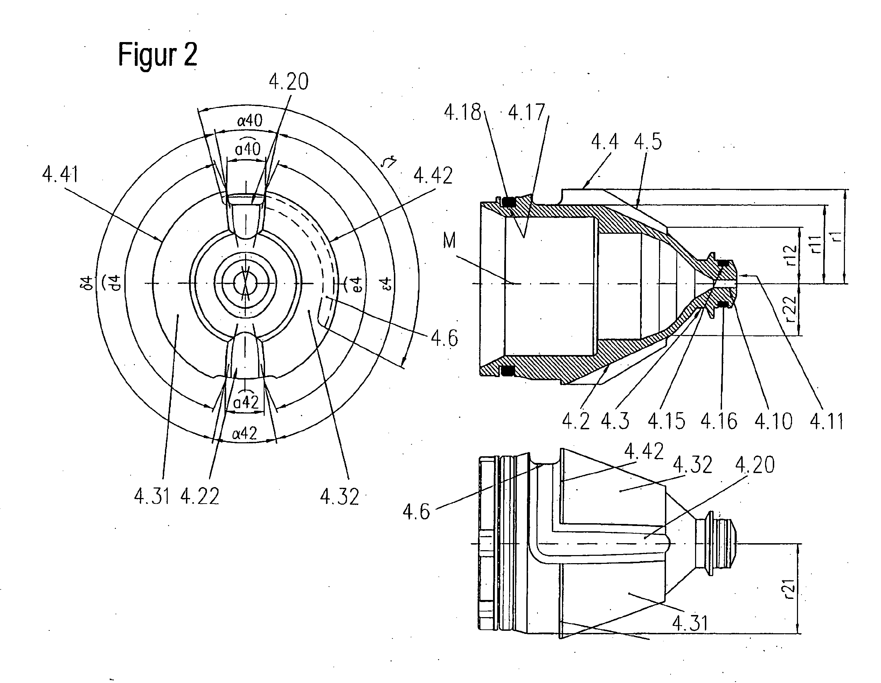

Im vorliegenden Plasmabrennerkopf nach Figur 1 wird die Kühlflüssigkeit nahezu senkrecht zur Längsachse des Plasmabrennerkopfes 1 von der Düsenhalterung 5 auf die Düse 4 treffend in den Kühlflüssigkeitsraum geleitet. Dazu wird in einem Umlenkraum 10.10 des Kühlflüssigkeitsraums die Kühlflüssigkeit von der zur Längsachse parallelen Richtung in der Bohrung des Kühlflüssigkeitsvorlaufs WV des Plasmabrenners in Richtung erster Abschnitt 4.1 (s. Fig. 2) nahezu senkrecht zur Längsachse der Plasmabrennerkopfes 1 umgelenkt. Dann strömt die Kühlflüssigkeit durch eine Nut 4.6 (s. Fig. 1b und 2), die sich in Umfangsrichtung des ersten Abschnitts 4.1 auf einem Teilumfang, d. h. über ca. 110° erstreckt, in den durch den von einer Kühlflüssigkeitszulaufnut 4.20 (s. Fig. 1a, 1b und 2) der Düse 4 und der Düsenkappe 2 gebildeten Teil 10.11 in den die Düsenbohrung 4.10 umgebenden Teil 10.20 des Kühlflüssigkeitsraums und umströmt die Düse 4 dort. Dann strömt die Kühlflüssigkeit durch einen von einer Kühlflüssigkeitsrücklaufnut 4.22 der Düse 4 und der Düsenkappe 2 gebildeten Raum 10.15 zurück zum Kühlflüssigkeitsrücklauf WR, wobei der Übergang hier im Wesentlichen parallel zur Längsachse des Plasmabrennerkopfes erfolgt (nicht dargestellt).

Weiterhin ist der Plasmabrennerkopf 1 mit einer Düsenschutzkappenhalterung 8 und einer Düsenschutzkappe 9 ausgestattet. Durch diesen Bereich strömt einen Sekundärgas'SG, das den Plasmastrahl umgibt. Das Sekundärgas SG durchströmt dabei eine Sekundärgasführung 9.1 und kann durch diese in Rotation versetzt werden.

Fig. 1a zeigt eine Schnittdarstellung entlang der Linie A-A des Plasmabrenners aus Figur 1. Diese zeigt, wie der durch die Kühlflüssigkeitszulaufnut 4.20 der Düse 4 und der Düsenkappe 2 gebildete Teil 10.11 durch Abschnitte 4.41 und 4.42 von nach außen hervorstehenden Bereichen 4.31 und 4.32 der Düse 4 in Kombination mit den Innenfläche 2.5 der Düsenkappe 2 einen Nebenschluss zwischen dem Kühlflüssigkeitsvorlauf und Kühlflüssigkeitsrücklauf verhindern. So wird eine wirksame Kühlung der Düse 4 im Bereich der Düsenspitze erreicht und eine thermische Überlastung verhindert. Es wird sichergestellt, dass möglichst viel Kühlflüssigkeit den Teil 10.20 des Kühlmittelraums erreicht. Es kam bei Versuchen zu keiner Verfärbung der Düse im Bereich der Düsenbohrung 4.10 mehr. Auch traten Undichtigkeiten zwischen der Düse 4 und der Düsenkappe 2 nicht mehr auf und der Rundring 4.16 wurde nicht überhitzt.

Figur 1b beinhaltet eine Schnittdarstellung entlang der Linie B-B des Plasmabrennerkopfes von Figur 1, die die Ebene des Umlenkraums 10.10 und die Verbindung des Kühlflüssigkeitsvorlaufs über die ca. 110° umlaufende Nut 4.6 in der Düse 4 und die um 90° versetzt angeordneten Bohrungen für den Kühlflüssigkeitsvorlauf WV und Kühlflüssigkeitsrücklauf WR zeigt.

Fig. 2 zeigt die Düse 4 des Plasmabrennerkopfes von Figur 1. Sie verfügt über eine Düsenbohrung 4.10 für den Austritt eines Plasmagasstrahls an einer Düsenspitze 4.11, einen ersten Abschnitt 4.1, dessen Außenfläche 4.4 im wesentlichen zylindrisch ist, und einen sich daran zur Düsenspitze 4.11 anschließenden zweiten Abschnitt 4.2, dessen Außenfläche 4.5 sich zur Düsenspitze 4.11 hin im wesentlichen kegelförmig verjüngt. Die Kühlflüssigkeitszulaufnut 4.20 erstreckt sich über einen Teil des ersten Abschnitts 4.1 und über den zweiten Abschnitt 4.2 in der Außenfläche 4.5 der Düse 4 zur Düsenspitze 4.11 hin und endet vor der zylindrischen Außenfläche 4.3. Die Kühlflüssigkeitsrücklaufnut 4.22 erstreckt sich über den zweiten Abschnitt 4.2 der Düse 4. Der Mittelpunkt der Kühlflüssigkeitszulaufnut 4.20 und der Mittelpunkt der Kühlflüssigkeitsrücklaufnut 4.22 sind um 180° versetzt zueinander über den Umfang der Düse 4 angeordnet. Zwischen der Kühlflüssigkeitsvorlaufnut 4.20 und der Kühlflüssigkeitsrücklaufnut 4.22 befinden sich die nach außen hervorstehenden Bereiche 4.31 und 4.32 mit den dazu gehörigen Abschnitten 4.41 und 4.42.

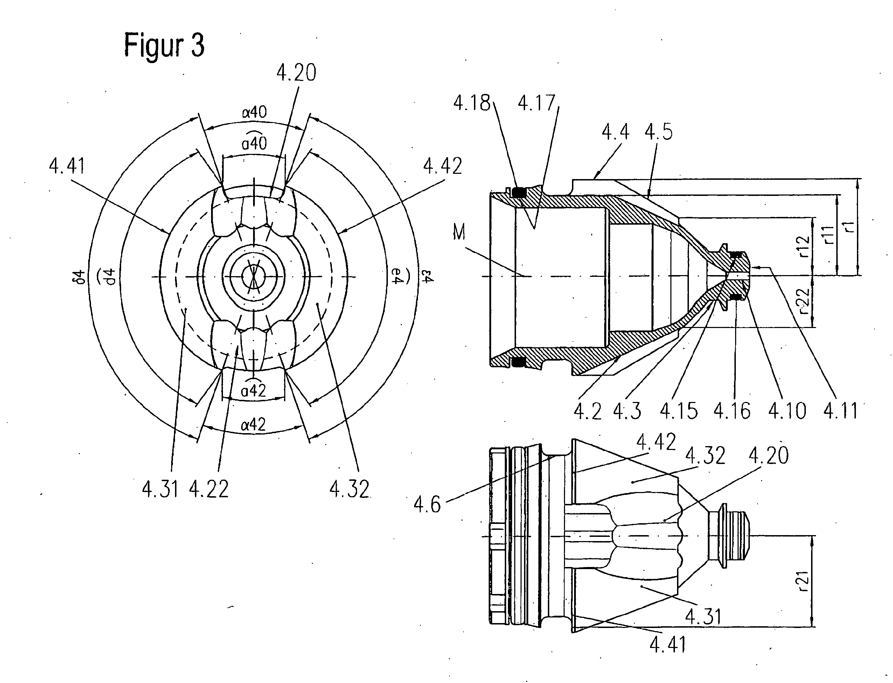

Figur 3 zeigt eine Düse gemäß einer weiteren speziellen Ausführungsform der Erfindung, die auch in den Plasmabrennerkopf nach Figur 1 eingesetzt werden kann. Die Kühlflüssigkeitszulaufnut 4.20 ist mit einer Nut 4.6 verbunden, die sich hier in Umfangsrichtung über den gesamten Umfang erstreckt. Dies hat den Vorteil, dass die Bohrung für den Kühlflüssigkeitsvorlauf WV und den Kühlflüssigkeitsrücklauf WR im Plasmabrennerkopf beliebig versetzt angeordnet sein können. Außerdem ist dies für die Kühlung des Übergangs zwischen der Düsenhalterung 5 und der Düse 4 vorteilhaft. Gleiches kann natürlich auch prinzipiell für eine Kühlflüssigkeitsrücklaufnut 4.22 genutzt werden.

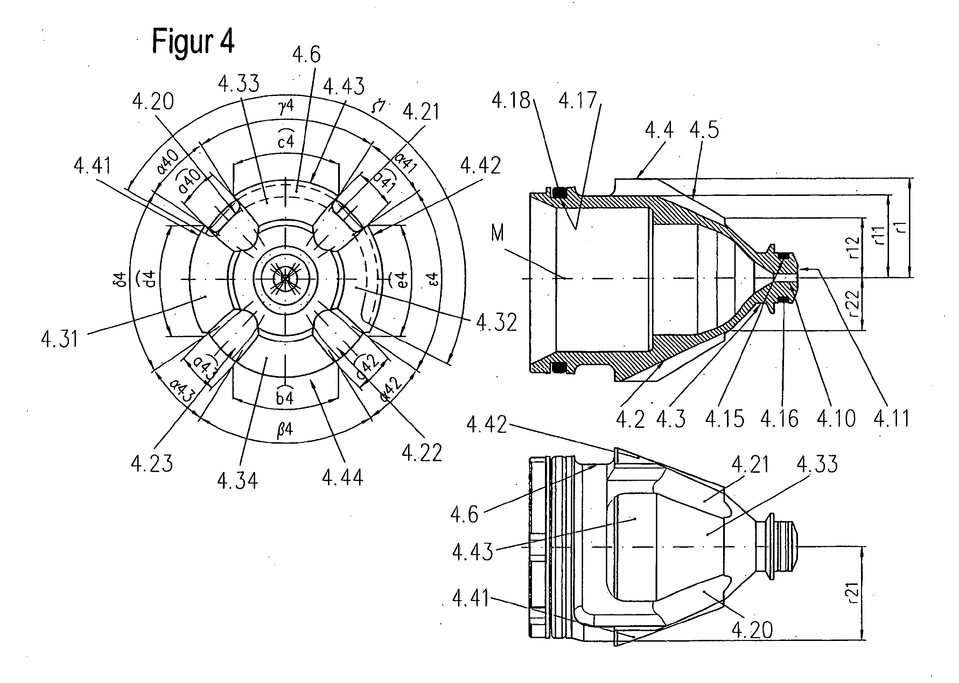

Figur 4 zeigt eine Düse gemäß einer weiteren speziellen Ausführungsform der Erfindung, die auch in den Plasmabrennerkopf nach Figur 1 eingesetzt werden kann.. Die Kühlflüssigkeitszulaufnuten 4.20 und 4.21 erstrecken sich über einen Teil des ersten Abschnitts 4.1 und über den zweiten Abschnitt 4.2 in der Außenfläche 4.5 der Düse 4 zur Düsenspitze 4.11 hin und enden vor der zylindrischen Außenfläche 4.3. Die Kühlflüssigkeitsrücklaufnuten 4.22 und 4.23 erstrecken sich über den zweiten Abschnitt 4.2 der Düse 4. Zwischen den Kühlflüssigkeitszulaufnuten 4.20 und 4.21 und den Kühlflüssigkeitsrücklaufnuten 4.22 und 4.23 befinden sich die nach außen hervorstehenden Bereiche 4.31, 4.32, 4.33 und 4.34 mit den dazu gehörigen Abschnitten 4.41, 4.42, 4.34 und 4.44. Die Kühlflüssigkeitszulaufnuten 4.20 und 4.21 sind durch eine in Umfangsrichtung des ersten Abschnitts 4.1 der Düse 4 auf einem Teilumfang zwischen den Nuten 4.20 und 4.21, d. h. über ca. 160° erstreckende Nut 4.6 der Düse 4 miteinander verbunden.

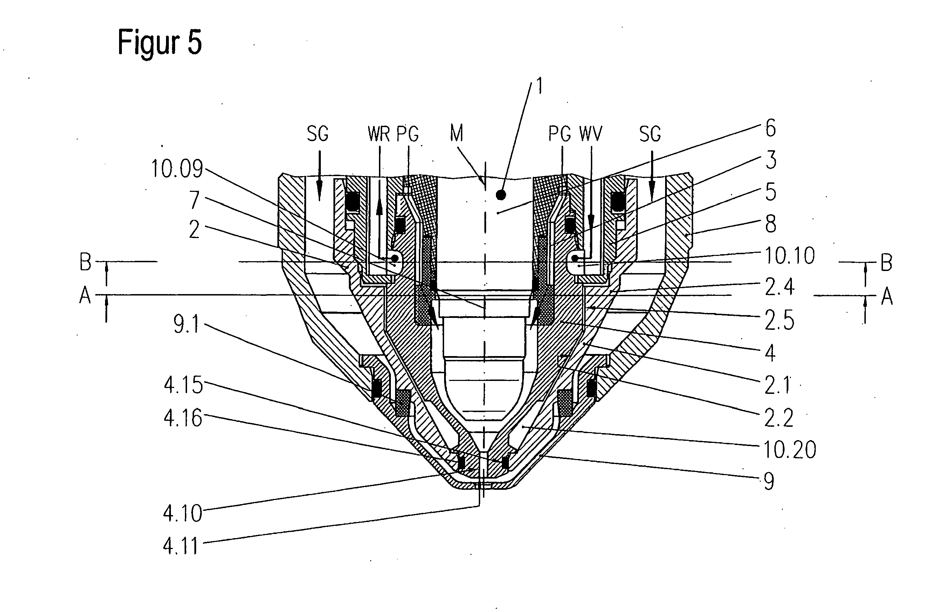

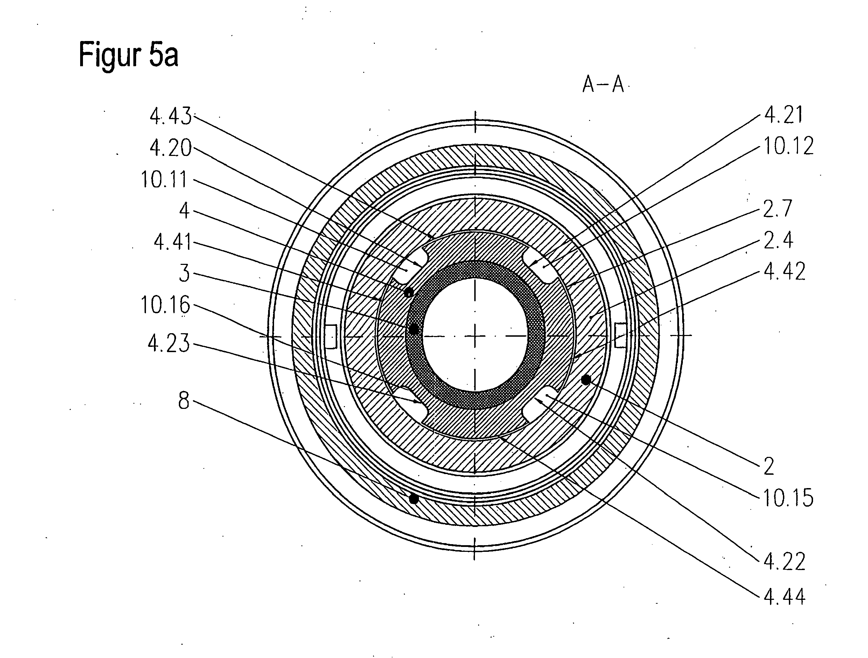

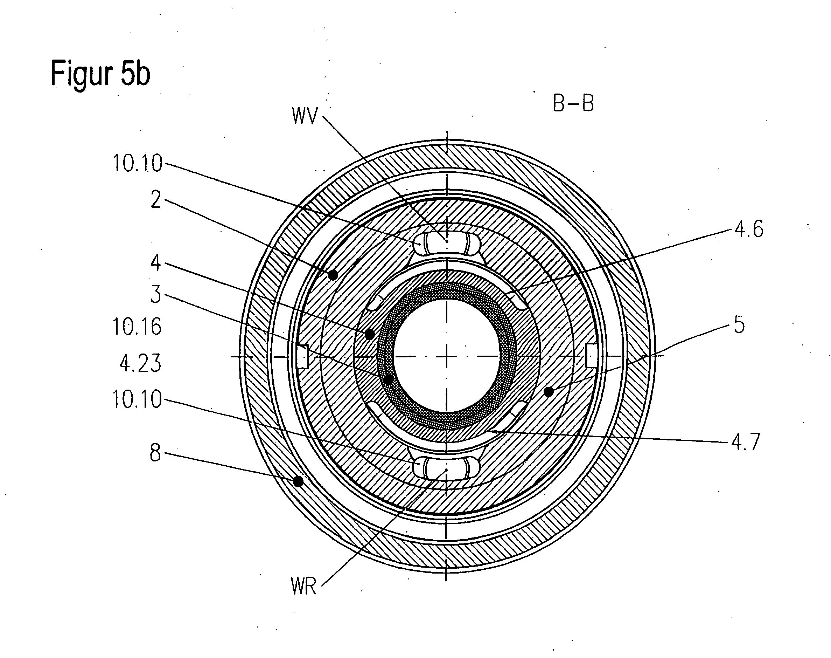

Figur 5 stellt einen Plasmabrennerkopf gemäß einer weiteren speziellen Ausführungsform der Erfindung dar. Auch hier wird die Kühlflüssigkeit nahezu senkrecht zur Längsachse des Plasmabrennerkopfes 1 von einer Düsenhalterung 5 auf die Düse 4 treffend in einen Kühlflüssigkeitsraum geleitet. Dazu wird im Umlenkraum 10.10 des Kühlflüssigkeitsraums die Kühlflüssigkeit von der zur Längsachse parallelen Richtung in der Bohrung des Kühlflüssigkeitsvorlaufs WV des Plasmabrenners in Richtung erster Düsenabschnitt 4.1 nahezu senkrecht zur Längsachse der Plasmabrennerkopfes 1 umgelenkt. Danach strömt die Kühlflüssigkeit durch die von den Kühlflüssigkeitszulaufnuten 4.20 und 4.21 der Düse 4 und der Düsenkappe 2 gebildeten Teile 10.11 und 10.12 (s. Fig. 5a) in den die Düsenbohrung 4.10 umgebenden Bereich 10.20 des Kühlflüssigkeitsraums und umströmt die Düse 4 dort. Danach strömt die Kühlflüssigkeit durch die von den Kühlflüssigkeitsrücklaufnuten 4.22 und 4.23 der Düse 4 und der Düsenkappe 2 gebildeten Teile 10.15 und 10.16 zurück zum Kühlflüssigkeitsrücklauf WR, wobei der Übergang hier nahezu senkrecht zur Längsachse des Plasmabrennerkopfes, durch den Umlenkraum 10.9 erfolgt.

Fig. 5a ist eine Schnittdarstellung entlang der Linie A-A des Plasmabrennerkopfes von Figur 5, die zeigt, wie die durch die Kühlflüssigkeitszulaufnuten 4.20 und 4.21 der Düse 4 und der Düsenkappe 2 gebildeten Teile 10.11 und 10.12 durch die Abschnitte 4.41 und 4.42 der hervorstehenden Bereiche 4.31 und 4.32 der Düse 4 in Kombination mit der Innenfläche der Düsenkappe 2 einen Nebenschluss zwischen den Kühlflüssigkeitszuläufen und Kühlflüssigkeitsrückläufen verhindern. Gleichzeitig wird ein Nebenschluss zwischen den Teilen 10.11 und 10.12 durch den Abschnitt 4.43 des hervorstehenden Bereichs 4.33 und zwischen den Teilen 10.15 und 10.16 durch den Abschnitt 4.44 des hervorstehenden Bereiches 4.43 verhindert.

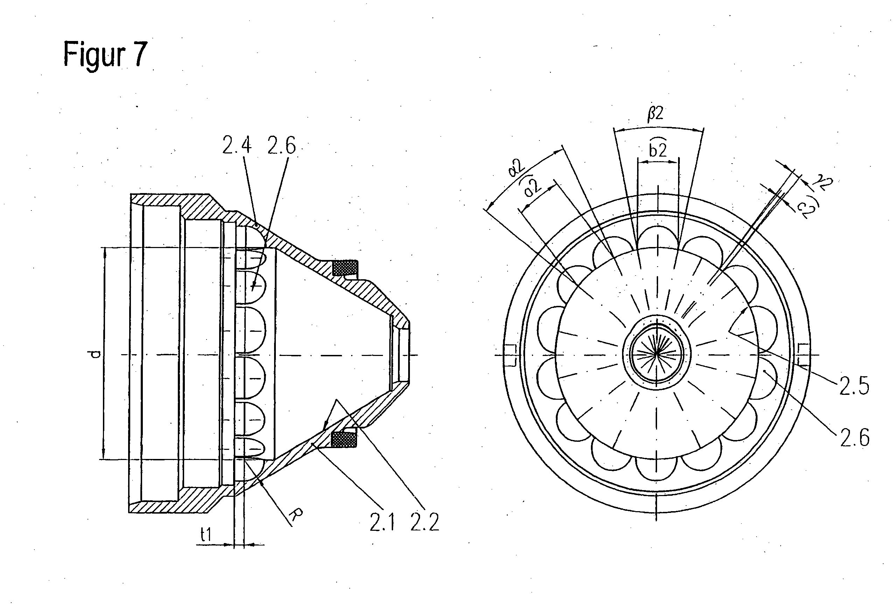

Figur 5b ist eine Schnittdarstellung entlang der Linie B-B des Plasmabrennerkopfes von Figur 7, die die Ebene der Umlenkräume 10.9 und 10.10 zeigt.

Fig. 6 zeigt die Düse 4 des Plasmabrennerkopfes von Figur 5. Sie verfügt über eine Düsenbohrung 4.10 für den Austritt eines Plasmagasstrahls an einer Düsenspitze 4.11, einen ersten Abschnitt 4.1, dessen Außenfläche 4.4 im wesentlichen zylindrisch ist, und einen sich daran zur Düsenspitze 4.11 anschließenden zweiten Abschnitt 4.2, dessen Außenfläche 4.5 sich zur Düsenspitze 4.11 hin im wesentlichen kegelförmig verjüngt. Die Kühlflüssigkeitszulaufnuten 4.20 und 4.21 und die Kühlflüssigkeitsrücklaufnuten 4.22 und 4.23 erstrecken sich über einen Teil des ersten Abschnitts 4.1 und über den zweiten Abschnitt 4.2 in der Außenfläche 4.5 der Düse 4 zur Düsenspitze 4.11 hin und enden vor der zylindrischen Außenfläche 4.3. Der Mittelpunkt der Kühlflüssigkeitszulaufnut 4.20 und der Mittelpunkt der Kühlflüssigkeitsrücklaufnut 4.22 sowie der Mittelpunkt der der Kühlflüssigkeitszulaufnut 4.21 und der Mittelpunkt der Kühlflüssigkeitsrücklaufnut 4.23 sind um 180° versetzt zueinander über den Umfang der Düse 4 angeordnet und gleich groß.

Zwischen der Kühlflüssigkeitsvorlaufnut 4.20 und der Kühlflüssigkeitsrücklaufnut 4.22 befindet sich ein nach außen hervorstehender Bereich 4.31 mit dazu gehörigem Abschnitt 4.41 und zwischen der Kühlflüssigkeitszulaufnut 4.21 und der Kühlflüssigkeitsrücklaufnut 4.23 befindet sich ein nach außen hervorstehender Bereich 4.32 mit dazu gehörigem Abschnitt 4.42. Zwischen den Kühlflüssigkeitszulaufnuten 4.20 und 4.21 befindet sich ein nach außen hervorstehender Bereich 4.33 mit dazu gehörigem Abschnitt 4.43. Zwischen den Kühlflüssigkeitsrücklaufnuten 4.22 und 4.23 befindet sich ein nach außen hervorstehender Bereich 4.34 mit dazu gehörigem Abschnitt 4.44.

Auch wenn dies womöglich vorangehend anders beschrieben oder gezeigt sein sollte, können die (winkelmäßigen) Breiten der Flüssigkeitszulaufnuten unterschiedlich sein. Dasselbe gilt auch für die (winkelmäßigen) Breiten der Flüssigkeitsrücklaufnuten.

Figur 7 zeigt Einzeldarstellungen einer in dem Plasmabrennerkopf 1 von Figur 1 eingesetzten Düsenkappe 2. Die Düsenkappe 2 weist eine sich im Wesentlichen kegelförmig verjüngende Innenfläche 2.2 auf, die in diesem Fall in einer radialen Ebene vierzehn Ausnehmungen 2.6 aufweist. Die Ausnehmungen 2.6 sind äquidistant über den Innenumfang angeordnet und im Radialschnitt halbkreisförmig.

Die in der vorliegenden Beschreibung, in den Zeichnungen sowie in den Ansprüchen offenbarten Merkmale der Erfindung werden in sowohl einzeln als auch in beliebigen Kombinationen für die Verwirklichung der Erfindung in ihren verschiedenen Ausführungsformen wesentlich sein.

## Patentansprüche

1. Düse (4) für einen flüssigkeitsgekühlten Plasmabrenner, umfassend eine Düsenbohrung (4.10) für den Austritt eines Plasmagasstrahls an einer Düsenspitze (4.11), einen ersten Abschnitt (4.1), dessen Außenfläche (4.4) im wesentlichen zylindrisch ist, und einen sich daran zur Düsenspitze (4.11) anschließenden zweiten Abschnitt (4.2), dessen Außenfläche (4.5) sich zur Düsenspitze (4.11) hin im wesentlichen kegelförmig verjüngt, wobei mindestens zwei Flüssigkeitszulaufnuten (4.20 und 4.21) und mindestens zwei Flüssigkeitsrücklaufnuten (4.22 und 4.23) vorgesehen sind, die sich über den zweiten Abschnitt (4.2) in der Außenfläche (4.5) der Düse (4) zur Düsenspitze (4.11) hin erstrecken, wobei mindestens eine der Flüssigkeitszulaufnuten (4.20; 4.21) und/oder mindestens eine der Flüssigkeitsrücklaufnuten (4.22; 4.23) sich auch über einen Teil des ersten Abschnitts (4.1) erstreckt/erstrecken und sich im ersten Abschnitt (4.1) mindestens eine weitere Nut (4.6 oder 4.7), die mit mindestens einer der Flüssigkeitszulaufnuten (4.20; 4.21) oder mindestens einer der Flüssigkeitsrücklaufnuten (4.22; 4.23) in Verbindung steht, befindet.

2. Düse nach Anspruch 1, **dadurch gekennzeichnet, dass** der Mittelpunkt mindestens einer der Flüssigkeitszulaufnuten (4.20; 4.21) und der Mittelpunkt mindestens einer der Flüssigkeitsrücklaufnuten (4.22; 4.23) um 180° versetzt zueinander über den Umfang der Düse (4) angeordnet sind.

3. Düse nach einem der Ansprüche 1 oder 2, **dadurch gekennzeichnet, dass** sich mindestens eine der Flüssigkeitszulaufnuten (4.20; 4.21) und/oder mindestens eine der Flüssigkeitsrücklaufnut(en) (4.22; 4.23) in Umfangsrichtung über einen Bereich von 10° bis 270° erstreckt.

4. Düse nach einem der vorangehenden Ansprüche, **dadurch gekennzeichnet, dass** sich die weitere Nut (4.6) oder eine der weiteren Nuten (4.6 oder 4.7) in Umfangsrichtung des ersten Abschnitts (4.1) der Düse (4) über den gesamten Umfang erstreckt.

5. Düse nach einem der Ansprüche 1 bis 3, **dadurch gekennzeichnet, dass** sich die weitere Nut (4.6) oder mindestens eine der weiteren Nuten (4.6 oder 4.7) in Umfangsrichtung des ersten Abschnitts (4.1) der Düse (4) über einen Winkel ζ1 oder ζ2 im Bereich von 60° bis 300° erstreckt.

6. Düse nach Anspruch 5, **dadurch gekennzeichnet, dass** sich die weitere Nut (4.6) oder mindestens eine der weiteren Nuten (4.6 oder 4.7) in Umfangsrichtung des ersten Abschnitts (4.1) der Düse (4) über einen Winkel ζ1 oder ζ2 im Bereich von 90° bis 270° erstreckt.

7. Düse nach einem der vorangehenden Ansprüche, **dadurch gekennzeichnet, dass** genau zwei Flüssigkeitszulaufnuten (4.20; 4.21) und genau zwei Flüssigkeitsrücklaufnuten (4.22; 4.23) vorgesehen sind.

8. Düse nach Anspruch 7, **dadurch gekennzeichnet, dass** die beiden Flüssigkeitszulaufnuten (4.20; 4.21) und/oder die beiden Flüssigkeitsrücklaufnuten (4.22; 4.23) im ersten Abschnitt (4.1) der Düse (4) miteinander in Verbindung stehen.

9. Düse nach einem der vorhergehenden Ansprüche, **dadurch gekennzeichnet, dass** mindestens eine der weiteren Nuten (4.6 und/oder 4.7) über mindestens eine der Flüssigkeitszulaufnuten (4.20; 4.21) oder über mindestens eine der Flüssigkeitsrücklaufnuten (4.22; 4.23) hinausgeht.

10. Plasmabrennerkopf (1), umfassend:
- eine Düse nach einem der Ansprüche 1 bis 9,
- eine Düsenhalterung (5) zur Halterung der Düse (4), und
- eine Düsenkappe (2), wobei die Düsenkappe (2) und die Düse (4) einen Kühlflüssigkeitsraum bilden, der über zwei jeweils um 60° bis 180° versetzte Bohrungen mit einer Kühlflüssigkeitszulaufleitung bzw. Kühlflüssigkeitsrücklaufleitung verbindbar ist, wobei die Düsenhalterung (5) so gestaltet ist, dass die Kühlflüssigkeit nahezu senkrecht zur Längsachse des Plasmabrennerkopfes (1) auf die Düse (4) treffend in den Kühlflüssigkeitsraum und/oder nahezu senkrecht zur Längsachse aus dem Kühlflüssigkeitsraum in die Düsenhalterung gelangt.

11. Plasmabrennerkopf (1) nach Anspruch 10, **dadurch gekennzeichnet, dass** die Düsenkappe (2) auf ihrer Innenfläche (2.5) mindestens drei Ausnehmungen (2.6), deren zur Düse (4) gewandten Öffnungen sich jeweils über ein Bogenmaß (b₂) erstrecken, aufweist, wobei das Bogenmaß (b₄; c₄; d₄; e₄) der in Umfangsrichtung an die Flüssigkeitszulaufnuten (4.20; 4.21) und/oder Flüssigkeitsrücklaufnuten (4.22; 4.23) angrenzenden, gegenüber den Flüssigkeitszulaufnuten und/oder Flüssigkeitsrücklaufnuten nach außen hervorstehenden Bereiche (4.31; 4.32; 4.33; 4.34) der Düse (4) jeweils mindestens genauso groß wie das Bogenmaß (b₂) ist.

12. Plasmabrennerkopf (1) nach Anspruch 10 oder 11, **dadurch gekennzeichnet, dass** sich die beiden Bohrungen jeweils im wesentlichen parallel zur Längsachse des Plasmabrennerkopfes (1) erstrecken.

13. Plasmabrennerkopf (1) nach einem der Ansprüche 10 bis 12, **dadurch gekennzeichnet, dass** die Bohrungen um 180° versetzt angeordnet sind.

14. Plasmabrennerkopf (1) nach einem der Ansprüche 10 bis 13, **dadurch gekennzeichnet, dass** das Bogenmaß (c2) des Abschnitts zwischen den Ausnehmungen (2.6) der Düsenkappe (2) maximal halb so groß ist wie das minimale Bogenmaß (a42, a43) der Flüssigkeitsrücklaufnuten (4.22 und 4.23) oder das minimale Bogenmaß (a40, a41) der Flüssigkeitszulaufnuten (4.20 und 4.21) der Düse (4).

## Claims

1. Nozzle (4) for a liquid-cooled plasma torch, comprising a nozzle bore (4.10) for the emergence of a plasma gas jet at a nozzle tip (4.11), a first section (4.1), the outer surface (4.4) of which is substantially cylindrical, and a second section (4.2), which adjoins said first section in the direction of the nozzle tip (4.11) and the outer surface (4.5) of which narrows substantially conically toward the nozzle tip (4.11), wherein at least two liquid supply grooves (4.20 and 4.21) and at least two liquid return grooves (4.22 and 4.23) are provided which extend over the second section (4.2) in the outer surface (4.5) of the nozzle (4) toward the nozzle tip (4.11), wherein at least one of the liquid supply grooves (4.20; 4.21) and/or at least one of the liquid return grooves (4.22; 4.23) also extend(s) over a part of the first section (4.1), and, in the first section (4.1), there is situated at least one further groove (4.6 or 4.7) which is connected to at least one of the liquid supply grooves (4.20; 4.21) or to at least one of the liquid return grooves (4.22; 4.23).

2. Nozzle according to Claim 1, **characterized in that** the central point of at least one of the liquid supply grooves (4.20; 4.21) and the central point of at least one of the liquid return grooves (4.22; 4.23) are arranged offset with respect to one another by 180° over the circumference of the nozzle (4).

3. Nozzle according to either of Claims 1 and 2, **characterized in that** at least one of the liquid supply grooves (4.20; 4.21) and/or at least one of the liquid return groove(s) (4.22; 4.23) extends in the circumferential direction over a range of 10° to 270°.

4. Nozzle according to one of the preceding claims, **characterized in that** the further groove (4.6) or one of the further grooves (4.6 or 4.7) extends in the circumferential direction of the first section (4.1) of the nozzle (4) over the entire circumference.

5. Nozzle according to one of Claims 1 to 3, **characterized in that** the further groove (4.6) or at least one of the further grooves (4.6 or 4.7) extends in the circumferential direction of the first section (4.1) of the nozzle (4) over an angle ζ1 or ζ2 in the range of 60° to 300°.

6. Nozzle according to Claim 5, **characterized in that** the further groove (4.6) or at least one of the further grooves (4.6 or 4.7) extends in the circumferential direction of the first section (4.1) of the nozzle (4) over an angle ζ1 or ζ2 in the range of 90° to 270°.

7. Nozzle according to one of the preceding claims, **characterized in that** precisely two liquid supply grooves (4.20; 4.21) and precisely two liquid return grooves (4.22; 4.23) are provided.

8. Nozzle according to Claim 7, **characterized in that** the two liquid supply grooves (4.20; 4.21) and/or the two liquid return grooves (4.22; 4.23) are connected to one another in the first section (4.1) of the nozzle (4).

9. Nozzle according to one of the preceding claims, **characterized in that** at least one of the further grooves (4.6 and/or 4.7) extends beyond at least one of the liquid supply grooves (4.20; 4.21) or beyond at least one of the liquid return grooves (4.22; 4.23).

10. Plasma torch head (1), comprising:
- a nozzle according to one of Claims 1 to 9,
- a nozzle holder (5) for holding the nozzle (4), and
- a nozzle cap (2), wherein the nozzle cap (2) and the nozzle (4) form a cooling liquid chamber which is connectable by way of two bores, which are offset in each case by 60° to 180°, to a cooling liquid supply line and cooling liquid return line respectively, wherein the nozzle holder (5) is designed such that the cooling liquid passes into the cooling liquid chamber so as to strike the nozzle (4) approximately at right angles to the longitudinal axis of the plasma torch head (1), and/or passes from the cooling liquid chamber into the nozzle holder approximately at right angles to the longitudinal axis.

11. Plasma torch head (1) according to Claim 10, **characterized in that** the nozzle cap (2) has, on its inner surface (2.5), at least three recesses (2.6) whose openings, facing toward the nozzle (4), each extend over an arc dimension (b₂), wherein the arc dimension (b₄; c₄; d₄; e₄) of the regions (4.31; 4.32; 4.33; 4.34), which adjoin the liquid supply grooves (4.20; 4.21) and/or liquid return grooves (4.22; 4.23) in the circumferential direction and which protrude outwardly in relation to the liquid supply grooves and/or liquid return grooves, of the nozzle (4) is in each case at least equal to the arc dimension (b₂).

12. Plasma torch head (1) according to Claim 10 or 11, **characterized in that** the two bores each extend substantially parallel to the longitudinal axis of the plasma torch head (1).

13. Plasma torch head (1) according to one of Claims 10 to 12, **characterized in that** the bores are arranged offset by 180°.

14. Plasma torch head (1) according to one of Claims 10 to 13, **characterized in that** the arc dimension (c2) of the section between the recesses (2.6) of the nozzle cap (2) amounts to at most half of the minimum arc dimension (a42, a43) of the liquid return grooves (4.22 and 4.23) or of the minimum arc dimension (a40, a41) of the liquid supply grooves (4.20 and 4.21) of the nozzle (4).

## Revendications

1. Tuyère (4) pour une torche à plasma refroidie par liquide, comportant un alésage de tuyère (4.10) pour la sortie d'un jet de gaz plasma au niveau d'une pointe de tuyère (4.11), une première portion (4.1) dont la surface extérieure (4.4) est essentiellement cylindrique, et une deuxième portion (4.2) s'y raccordant en direction de la pointe de tuyère (4.11), la surface extérieure (4.5) de la deuxième portion se rétrécissant essentiellement sous forme conique en direction de la pointe de tuyère (4.11), au moins deux rainures d'amenée de liquide (4.20 et 4.21) et au moins deux rainures de retour de liquide (4.22 et 4.23) étant prévues, lesquelles s'étendent sur la deuxième portion (4.2) dans la surface extérieure (4.5) de la tuyère (4) en direction de la pointe de tuyère (4.11), au moins l'une des rainures d'amenée de liquide (4.20 ; 4.21) et/ou au moins l'une des rainures de retour de liquide (4.22 ; 4.23) s'étendant également sur une partie de la première portion (4.1), et au moins une rainure supplémentaire (4.6 ou 4.7), qui est en liaison avec au moins l'une des rainures d'amenée de liquide (4.20 ; 4.21) ou au moins l'une des rainures de retour de liquide (4.22 ; 4.23), se trouvant dans la première portion (4.1).

2. Tuyère selon la revendications 1, **caractérisée en ce que** le centre d'au moins l'une des rainures d'amenée de liquide (4.20 ; 4.21) et le centre d'au moins l'une des rainures de retour de liquide (4.22 ; 4.23) sont disposés de manière décalée de 180° l'un par rapport à l'autre sur la périphérie de la tuyère (4).

3. Tuyère selon l'une des revendications 1 ou 2, **caractérisée en ce qu'**au moins l'une des rainures d'amenée de liquide (4.20 ; 4.21) et/ou au moins l'une des rainures de retour de liquide (4.22 ; 4.23) s'étend(ent) dans la direction périphérique sur une région de 10° à 270°.

4. Tuyère selon l'une quelconque des revendications précédentes, **caractérisée en ce que** la rainure supplémentaire (4.6) ou l'une des rainures supplémentaires (4.6 ou 4.7) s'étend dans la direction périphérique de la première portion (4.1) de la tuyère (4) sur toute la périphérie.

5. Tuyère selon l'une quelconque des revendications 1 à 3, **caractérisée en ce que** la rainure supplémentaire (4.6) ou au moins l'une des rainures supplémentaires (4.6 ou 4.7) s'étend dans la direction périphérique de la première portion (4.1) de la tuyère (4) sur un angle ζ1 ou ζ2 dans la plage de 60° à 300°.

6. Tuyère selon la revendication 5, **caractérisée en ce que** la rainure supplémentaire (4.6) ou au moins l'une des rainures supplémentaires (4.6 ou 4.7) s'étend dans la direction périphérique de la première portion (4.1) de la tuyère (4) sur un angle ζ1 ou ζ2 dans la plage de 90° à 270°.

7. Tuyère selon l'une quelconque des revendications précédentes, **caractérisée en ce qu'**exactement deux rainures d'amenée de liquide (4.20 ; 4.21) et exactement deux rainures de retour de liquide (4.22 ; 4.23) sont prévues.

8. Tuyère selon la revendication 7, **caractérisée en ce que** les deux rainures d'amenée de liquide (4.20 ; 4.21) et/ou les deux rainures de retour de liquide (4.22 ; 4.23) sont en liaison l'une avec l'autre dans la première portion (4.1) de la tuyère (4).

9. Tuyère selon l'une quelconque des revendications précédentes, **caractérisée en ce qu'**au moins l'une des rainures supplémentaires (4.6 et/ou 4.7) dépasse au-delà d'au moins l'une des rainures d'amenée de liquide (4.20 ; 4.21) ou au-delà d'au moins l'une des rainures de retour de liquide (4.22 ; 4.23).

10. Tête de torche à plasma (1), comportant :
- une tuyère selon l'une quelconque des revendications 1 à 9,
- un support de tuyère (5) pour le support de la tuyère (4), et
- une coiffe de tuyère (2), la coiffe de tuyère (2) et la tuyère (4) formant un espace de liquide de refroidissement qui peut être relié, par le biais de deux alésages décalés respectivement de 60° à 180°, à une conduite d'amenée de liquide de refroidissement ou à une conduite de retour de liquide de refroidissement, le support de tuyère (5) étant configuré de telle sorte que le liquide de refroidissement parvienne dans l'espace de liquide de refroidissement pratiquement perpendiculairement à l'axe longitudinal de la tête de torche à plasma (1) de manière à atteindre la tuyère (4) et/ou parvienne dans le support de tuyère hors de l'espace de liquide de refroidissement pratiquement perpendiculairement à l'axe longitudinal.

11. Tête de torche à plasma (1) selon la revendication 10, **caractérisée en ce que** la coiffe de tuyère (2) comprend sur sa surface intérieure (2.5) au moins trois évidements (2.6) dont les ouvertures tournées vers la tuyère (4) s'étendent respectivement sur une mesure d'arc (b₂), la mesure d'arc (b₄ ; c₄ ; d₄ ; e₄) des réglions (4.31 ; 4.32 ; 4.33 ; 4.34) de la tuyère (4) adjacentes aux rainures d'amenée de liquide (4.20 ; 4.21) et/ou aux rainures de retour de liquide (4.22 ; 4.23) dans la direction périphérique et faisant saillie vers l'extérieur par rapport aux rainures d'amenée de liquide et/ou aux rainures de retour de liquide étant respectivement au moins aussi grande que la mesure d'arc (b₂).

12. Tête de torche à plasma (1) selon la revendication 10 ou 11, **caractérisée en ce que** les deux alésages s'étendent respectivement essentiellement parallèlement à l'axe longitudinal de la tête de torche à plasma (1).

13. Tête de torche à plasma (1) selon l'une quelconque des revendications 10 à 12, **caractérisée en ce que** les alésages sont disposés de manière décalée de 180°.

14. Tête de torche à plasma (1) selon l'une quelconque des revendications 10 à 13, **caractérisée en ce que** la mesure d'arc (c2) de la portion entre les évidements (2.6) de la coiffe de tuyère (2) représente au maximum la moitié de la mesure d'arc minimale (a42, a43) des rainures de retour de liquide (4.22 et 4.23) ou de la mesure d'arc minimale (a40, a41) des rainures d'amenée de liquide (4.20 et 4.21) de la tuyère (4).
